# EUROPEAN PATENT SPECIFICATION

(11) **EP 3 490 110 B1**
(45) Date of publication and mention of the grant of the patent: **03.03.2021**
(21) Application number: 17203204.7
(22) Date of filing: 23.11.2017
(51) Int. Cl.: H02K 1/27, H02K 15/03

(54) **PERMANENT MAGNET FOR A PERMANENT MAGNET MACHINE**
DAUERMAGNET FÜR EINE DAUERMAGNETMASCHINE
AIMANT PERMANENT POUR MACHINE À AIMANT PERMANENT

(43) Date of publication of application: 29.05.2019
(73) Proprietor: Siemens Gamesa Renewable Energy A/S, 7330 Brande (DK)
(72) Inventor: Azar, Ziad, Sheffield, S10 4ED (GB); Thougaard, Hans-Joergen, 8600 Silkeborg (DK); URDA, Adriana Cristina, 2300 Copenhagen (DK); NICHOLSON, Camilla Victoria, Vejle (DK); SUN, Hui, 6000 Kolding (DK)
(74) Representative: Aspacher, Karl-Georg

(56) References cited:
- WO-A1-2007/074036
- WO-A1-2016/114054
- WO-A2-2011/048581
- DE-A1- 10 307 231
- US-A- 3 810 056
- US-A1- 2013 106 207

## Description

### Field of invention

The present invention relates to the field of increasing the strength of a permanent magnet and increasing the performance of a permanent magnet machine. Particularly, the present invention relates to a permanent magnet for a permanent magnet machine, a permanent magnet machine, a method for manufacturing a permanent magnet for a permanent magnet machine, and a method for manufacturing a permanent magnet machine.

### Art Background

In today's permanent magnet machines in order to hold the permanent magnets in place in permanent magnet machines, i.e. permanent magnet wind power generators, a non-magnetic cover as well as a magnetic back plate are used to keep the magnet in place during operation and rotating, respectively of the permanent magnet machine.

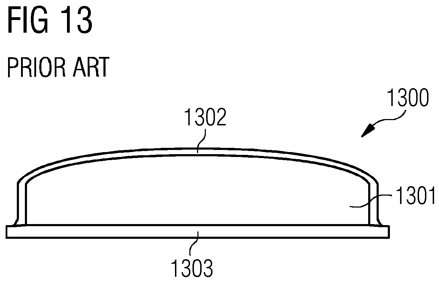

A current permanent magnet module 1300 according to the prior art in a sectional view in the axial direction is shown in **Fig. 13****.** The current magnet module 1300 comprises a permanent magnet element 1301, a cover 1302 and a back plate 1303. In the current permanent magnet module 1300 the permanent magnet element 1301 is glued to the back plate (baseplate) 1303 and the cover 1302 is welded to the back plate 1303.

The permanent magnet element may be produced from powders using a sintering process. During the sintering process, there may occur shrinkage of the magnetic volume. Particularly, the density of a pressed permanent magnet element is around 4.5 g/cm³ before the sintering process and it transforms into a density of the sintered permanent magnet element after the sintering process of around 7.5 g/cm³. After the sintering process, the permanent magnet element may be machined and grinded as well as covered by a coating on all sides using different equipment and techniques.

The machining and grinding produces material waste which has to be disposed. Additionally, after the machining and grinding, the permanent magnet element may be coated using various coating types, in order to protect the permanent magnet element from corrosion.

Furthermore, the cover covering the finished permanent magnet element causes a larger electromagnetic airgap resulting in a decreased performance and efficiency as well as higher manufacturing costs since the cover is fixed to the back plate by welding. Hence, the permanent magnet module may have a complex manufacturability, a decreased strength and/or a decreased performance.

WO 2016/114054 A1, DE 103 07 231 A1, WO 2011/048581 A2, WO 2007/074036 A1 and US 2013/106207 A1 disclose examples of permanent magnets for permanent magnet machines.

The manufacturing costs of a permanent magnet are crucial from the economic perspective of the permanent magnet machine. Further, the reliability of the permanent magnet is a key factor for the operational costs of the permanent magnet machine.

### Summary of the Invention

It may be an objective of the present invention to provide a simple and reliable permanent magnet for a permanent magnet machine which is able to reduce manufacturing costs and to increase reliability as well as strength.

This objective may be solved by the permanent magnet for a permanent magnet machine, the permanent magnet machine, the method for manufacturing the permanent magnet for the permanent magnet machine, and the method for manufacturing the permanent magnet machine according to the independent claims.

According to a first aspect of the present invention, a permanent magnet for a permanent magnet machine according to claim 1 is described.

The permanent magnet comprises a base body and at least one first fixing protrusion for fixing the base body to a rotor of the permanent magnet machine. The first fixing protrusion extends from a first side of the base body. Furthermore, the base body and the at least one first fixing protrusion are formed integrally as one-piece.

The base body may be the main body of the permanent magnet. Additionally, the base body comprises a first side which delimits the base body on one side of the base body.

The fixing protrusion is formed at the base body, i.e. the fixing protrusion extends from the first side of the base body.

The fixing protrusion and the base body are formed monolithically as a one-piece element of a magnetic material.

The number of necessary first fixing protrusions may be adapted dependent on the requirements in the rotor, as for example dependent on the forces acting upon the permanent magnet during operation of the permanent magnet. Furthermore, the number of necessary first fixing protrusions may depend on geometrical constraints given by the rotor. Particularly, if the radial extension of the rotor is relatively small seen in the radial direction of the rotor and there is not much space in the radial direction of the rotor for fixing the permanent magnets, the number of first fixing protrusions may be high and each first fixing protrusion may have a small extension seen in the radial direction of the rotor. The radial direction may be defined as the direction running through the axis of the rotor and being perpendicular with the axis of rotation.

A third direction of the main body may be parallel to the rotational axis of the permanent magnet machine.

The at least one first fixing protrusion may have a first protrusion depth seen in the third direction. Additionally, the main body may have a main body depth seen in the third direction.

On the one hand, the first protrusion depth seen in the third direction may be equal to the main body depth. Then, the main body may particularly be coupled to the rotor over the entire main body depth.

On the other hand, the first protrusion depth seen in the third direction may be shorter (or even longer) than the main body depth seen in the third direction. However, the first protrusion depth may not extend over the main body depth seen in the third direction. Then, the fixing of the main body to the rotor via the at least one first fixing protrusion may be limited to a certain section of the extension of the main body seen in the third direction.

Furthermore, when more than at least one first fixing protrusion is provided at the first side, the more than at least one first fixing protrusion may be arranged one adjacent to another seen in the third direction. Hence, the main body may particularly be fixed to the rotor at different sections of the main body seen in the third direction. In other words, the more than at least one first fixing protrusion are formed as discontinued parts.

According to a further aspect of the present invention, a permanent magnet machine is described. The permanent magnet machine comprises a rotor and an above-defined permanent magnet.

The rotor may be an inner rotor or an outer rotor. On the one hand, if the rotor is an inner rotor, the permanent magnet is fixed to an outer side of the rotor seen in a radial direction of the rotor. On the other hand, if the rotor is an outer rotor, the permanent magnet is fixed to the inner side of the rotor seen in the radial direction of the rotor.

The radial direction of the rotor may be parallel to the radial direction of the permanent magnet machine.

The permanent magnet is fixed to the rotor such that the first side of the permanent magnet is in contact with either the radially inner surface of the rotor or the radially outer surface of the rotor, dependent on whether the rotor is an outer rotor or an inner rotor.

According to a further aspect of the present invention, a method for manufacturing a permanent magnet for a permanent magnet machine according to claim 9 is described. The method comprises forming a base body having a first side, and forming at least one first fixing protrusion. Furthermore, the base body and the at least one first fixing protrusion are formed integrally as one-piece.

According to a further aspect of the present invention, a method for manufacturing a permanent magnet machine is described. The method comprises providing an above-defined permanent magnet for a permanent magnet machine, providing a rotor, and inserting the permanent magnet into the rotor.

Particularly, the above-described permanent magnet may have an increased mechanical strength when a pressing tool having the same shape as the base body and the at least one fixing protrusion, is used to form the base body and the at least one fixing protrusion in a common process step. Omitting the cover and the step of welding the cover to the base plate may have the further advantage that the manufacturing costs are lower. Additionally removing the back plate may have the further advantage that the manufacturing costs may even be lower. Furthermore, the performance may be higher due to smaller electromagnetic airgaps as well as due to a geometrically larger base body and hence more magnetic material. Additionally, the fixation may be stronger because a magnetic attraction between the base body and the rotor steel may add to the geometrical holding force of the fixing protrusion and the rotor.

According to a further exemplary embodiment of the present invention, the permanent magnet further comprises at least one second fixing protrusion extending from the first side, wherein the second fixing protrusion is arranged adjacent to the at least one first fixing protrusion.

The at least one second fixing protrusion may be formed by the same method as the at least one first fixing protrusion. Particularly, the base body, the at least one first fixing protrusion, and the at least one second fixing protrusion are formed in one common process step, such as pressing in a mould, sintering, or rapid prototyping.

The at least one second fixing protrusion is arranged adjacent to the at least one first fixing protrusion according to the present invention means that the first fixing protrusion and the second fixing protrusion are distanced to each other. However, the first fixing protrusion and the second fixing protrusion may both extend from the first side.

Particularly, the first fixing protrusion and the second fixing protrusion may be of different shape. Particularly, the first fixing protrusion and the second fixing protrusion may have mirror-inverted geometries. Thereby, a holding force of the permanent magnet to the rotor may be increased.

According to the present invention, the at least one first fixing protrusion is formed in a cross-sectional view in the shape of a L.

The cross-sectional view may be defined as the sectional representation in which the first side is shown as a respective boundary line. Additionally, in the cross-sectional view a plane is shown which is parallel to a plane which is held by two radial vectors of the permanent magnet machine extending rectangular to each other.

L-shaped and T-shaped fixing protrusions may provide an enhanced holding force in the radial direction because of the short leg extending in a radial direction of the rotor when the permanent magnet is mounted into the rotor.

The shape of a rectangle may advantageously provide enhanced holding forces because the contacting area between the fixing protrusion and a wall of a groove in the rotor may be increased and hence the friction force between the rotor and the fixing protrusion may be increased.

The shape of a square may particularly result in increased magnetic forces between the base body and the rotor, because the contact area between a base surface of the base body and a surface of the rotor being in contact with the base surface of the base body may be increased.

The shape of a rhomboid may particularly provide a compromise between the above-described advantages.

According to a further exemplary embodiment of the present invention, the base body further comprises a second side opposite the first side, a third side and a fourth side, each interconnecting the first side and the second side, and distanced to one another. The permanent magnet further comprises at least one third fixing protrusion extending from the third side and/or at least one fourth fixing protrusion extending from the fourth side.

The first side and the second side are spaced apart from each other at the same time the third side and the fourth side are spaced apart from each other and interconnect the first side and the second side. Hence, in the cross-sectional view defined above, the first side, the second side, the third side and the fourth side delimit the base body.

The at least one third fixing protrusion and the at least one fourth fixing protrusion may be formed by the same method as the at least one first fixing protrusion.

Providing at least one third fixing protrusion and at least one identic fourth fixing protrusion may result in symmetric holding forces transmitted at the at least one third fixing protrusion and the at least one fourth fixing protrusion.

When different forces act at a first position where the at least one third fixing protrusion is fixed to the rotor and at a second position where the at least one fourth fixing protrusion is fixed to the rotor, there may be provided solely either the at least one third fixing protrusion or the at least one fourth fixing protrusion dependent on whether the force acting on the first position or the force acting on the second position is higher. Additionally, it may be possible to provide the at least one third protrusion and the at least one fourth protrusion with different shapes to react on different forces at the first position and the second position.

According to a further exemplary embodiment of the present invention, the permanent magnet is uncovered, in particular uncoated.

The permanent magnet being uncovered, in particular uncoated means according to the present application that the base body and/or the at least one fixing protrusion may not be surface treated after the manufacturing by sintering. The covering and/or coating may be omitted because after sintering, the base body and the at least one fixing protrusion, respectively, may be covered by a layer of oxide that may protect the base body and the at least one fixing protrusion, respectively, from corrosion.

Particularly, not all of the surfaces of the base body and/or the fixing protrusion are uncovered, in particular uncoated. For example solely one, two, three, four or five side surfaces may be uncovered, in particular uncoated. However, it may be understood that all side surfaces may be provided uncovered, in particular uncoated.

According to an alternative exemplary embodiment of the present invention, the permanent magnet is unmachined and/or ungrinded.

The permanent magnet being unmachined and/or ungrinded means according to the present application that the base body, the at least one fixing protrusion or the base body together with the at least one fixing protrusion may be used as it comes out of the oven without any additional or extra post-processing.

The permanent magnet may be used uncovered, in particular uncoated, and unmachined and/or ungrinded because the permanent magnet is sintered. The permanent magnet may be of any size or geometry, e.g. cuboid or bread loaf shaped.

Using the permanent magnet uncovered, in particular uncoated, and unmachined and/or ungrinded may be also suitable for bigger permanent magnets because the shrinkage of a larger permanent magnet compared and in relation to its dimensions may be less significant.

Particularly, omitting the step of machining and/or grinding and/or covering, in particular coating, may result in a cost reduction of the permanent magnet. Therefore, it also results in a cost reduction of the permanent magnet machine.

Particularly, not all of the surfaces of the base body and/or the fixing protrusion are unmachined and/or ungrinded. For example solely one, two, three, four or five side surfaces may be unmachined and/or ungrinded. However, it may be understood that all side surfaces may be provided unmachined and/or ungrinded.

According to a further exemplary embodiment of the present invention, the rotor comprises at least one groove, wherein the at least one groove is formed such that a shape of the at least one groove corresponds to a shape of the at least one first fixing protrusion, and wherein the at least one first fixing protrusion is coupled to the groove.

The at least one fixing protrusion may be coupled to the groove by inserting each of the at least one fixing protrusion in a respective groove and by formfitting each of the at least one fixing protrusion to a respective groove.

Each of the at least one groove may extend along an extending direction. Additionally, when more than one groove is provided in the rotor, the grooves may particularly extend parallel with respect to each other.

The extending direction of the at least one groove may particularly be parallel to the axis of rotation of the rotor. Hence, the permanent magnet may have an extension being parallel to the axis of rotation.

According to an alternative exemplary embodiment of the present invention, the permanent magnet is fixed to the rotor such that the permanent magnet and the rotor are unmovable with respect to each other.

The rotor and the permanent magnet being unmovable with respect to each other means according to the present application that the form fit may be a press fit between each groove and each fixing protrusion.

Hence, a relative movement between the rotor and the permanent magnet may be suppressed and therefore a magnetic fluctuation caused by the relative movement may be eliminated.

According to a further exemplary embodiment of the present invention, the base body and the at least one first fixing protrusion are formed in one common process step.

The base body and the at least one first fixing protrusion being formed in one common step means according to the present application that the base body and the fixing protrusion may for example be sintered together at the same time. Furthermore, the base body and the fixing protrusion may be formed by rapid prototyping e.g. in one common burning process.

According to a further exemplary embodiment of the present invention, the permanent magnet machine comprises the permanent magnet which is formed uncovered, in particular uncoated.

According to a further exemplary embodiment of the present invention, the permanent magnet machine comprises the permanent magnet which is formed unmachined and/or ungrinded.

According to a further exemplary embodiment of the present invention, the method further comprises after inserting the permanent magnet into the rotor, providing an extra layer of coating or spray coating to both, the rotor and the permanent magnet.

By coating or spray coating both, the rotor and the permanent magnet after fixing the permanent magnet to the rotor, all surfaces which may come in contact with a fluid, particularly air, being present in the permanent magnet machine, are additionally protected for example against corrosion. Furthermore, surfaces of the rotor and surfaces of the permanent magnet which solely come in contact with each other may be provided without any coating. This may cause reduced manufacturing costs because an additional surface treatment of these surfaces may be omitted.

It has to be noted that embodiments of the invention have been described with reference to different subject-matters. In particular, some embodiments have been described with reference to apparatus type claims whereas other embodiments have been described with reference to method type claims. However, a person skilled in the art will gather from the above and the following description that, unless otherwise notified, in addition to any combination of features belonging to one type of subject-matter also any combination between features relating to different subject-matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows a cross-sectional view of a permanent magnet comprising one first fixing protrusion according to a general example.
Fig. 2 shows a cross-sectional view of a permanent magnet comprising two first fixing protrusions according to a general example.
Fig. 3 shows a cross-sectional view of a permanent magnet comprising one first fixing protrusion according to a general example.
Fig. 4 shows a cross-sectional view of a permanent magnet comprising three first fixing protrusions according to a general example.
Fig. 5 shows a cross-sectional view of a permanent magnet comprising one first fixing protrusion and one second fixing protrusion according to a general example.
Fig. 6 shows a cross-sectional view of a permanent magnet comprising one first fixing protrusion according to a general example.
Fig. 7 shows a cross-sectional view of a permanent magnet comprising one first fixing protrusion and one second fixing protrusion according to an exemplary embodiment.
Fig. 8 shows a cross-sectional view of a permanent magnet comprising one third fixing protrusion and one fourth fixing protrusion according to a general example.
Fig. 9 shows a side view of a permanent magnet comprising two first fixing protrusions according to a general example.
Fig. 10 shows a sectional view in the axial direction of a rotor before fixing the permanent magnet to the rotor according to a general example.
Fig. 11 shows a sectional view in the axial direction of a rotor after fixing permanent magnets to the rotor according to , a general example.
Fig. 12 shows a side view of the base body after forming the base body according to an exemplary embodiment compared to a conventionally formed base body.
Fig. 13 shows a sectional view in the axial direction of a current permanent magnet module according to the prior art.

### Detailed Description

The illustrations in the drawings are schematically. It is noted that in different figures, similar or identical elements are provided with the same reference signs.

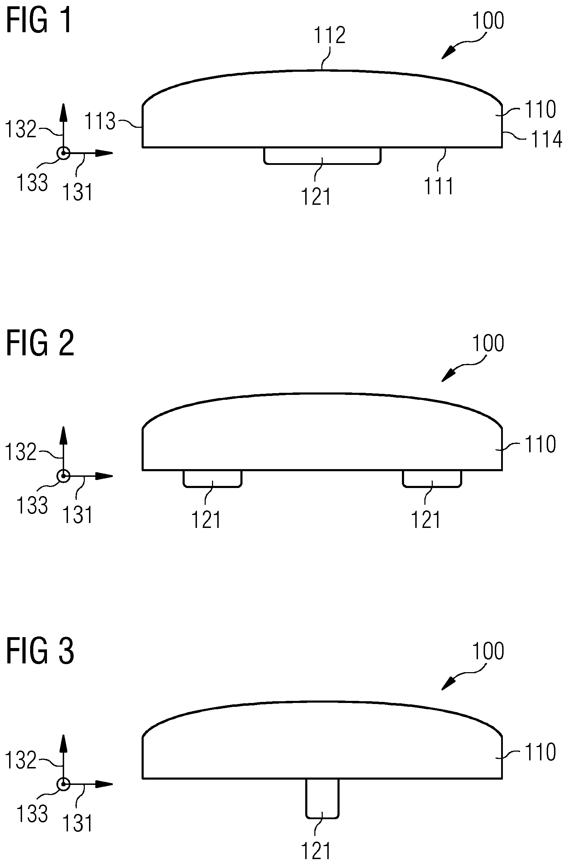

**Fig. 1** shows a cross-sectional view of a permanent magnet 100 comprising one first fixing protrusion 121 according to a general example.

The permanent magnet 100 comprises a bread loaf shaped base body 110 and a rectangular shaped first fixing protrusion 121.

The first fixing protrusion 121 extends from the first side 111 of the base body 110 and is arranged in the middle of the base body seen in a first direction 131 corresponding to the circumferential direction of the rotor. It may be understood that the first fixing protrusion may also be arranged at any other circumferential position at the first side (not shown in Fig. 1).

In Fig. 1, the first side 111 is planar. However, it may be understood that the first side 111 may alternatively be curved. The exact shape of the first side 111 may be dependent on the one hand on the width of the base body 110 in the first direction and on the other hand on the shape of the rotor surface.

The width of the rectangular shaped first fixing protrusion 121 is larger than the height of the first fixing protrusion 121 which extends parallel to a second direction 132.

A second side 112 is opposite the first side 111 and a third side 113 and a fourth side 114 interconnect the first side 111 and the second side 112, and are distanced to each other. The second direction 132 is rectangular to the first direction 131 and is defined as extending from the first side 111 in the direction of the second side 112. A third direction 133 extends rectangular to the first direction 131 and the second direction 132.

Each of the first side 111, the second side 112, the third side 113 and the fourth side 114 may be shaped curved or planar depending on the given geometrical constraints or the required magnetic features.

The first protrusion 121 extends in the third direction 133 over the entire depth of the base body 110 seen in the third direction 133 (not shown in Fig. 1).

**Fig. 2** shows a cross-sectional view of a permanent magnet 100 comprising two first fixing protrusions 121 according to a general example.

The permanent magnet 100 comprises a base body 110 which is shaped and formed identical to the base body 100 in Fig. 1, and two first fixing protrusions 121. The two first fixing protrusions 121 are distanced with respect to one another in the first direction 131. Each of the two first fixing protrusions 121 is shaped rectangular and has a smaller width compared to the one first fixing protrusion 121 in Fig. 1.

The width seen in the first direction 131 of the first fixing protrusion 121 is larger than the height of the first fixing protrusion 121 seen in the second direction 132. The two first fixing protrusions 121 are shaped and formed identical. It may be understood that the two first fixing protrusions may also be shaped and formed different from each other, for example dependent on different loads (not shown in Fig. 2).

Each of the two first protrusions 121 extends in the third direction 133 over the entire depth of the base body 110 seen in the third direction 133 (not shown in Fig. 2).

**Fig. 3** shows a cross-sectional view of a permanent magnet 100 comprising one first fixing protrusion 121 according to a general example.

The permanent magnet 100 comprises a base body 110 and one first fixing protrusion 121. The first fixing protrusion 121 is arranged in the middle of base body 110 seen in the first direction 131. It may be understood that the first fixing protrusion may also be arranged at any other circumferential position at the first side (not shown in Fig. 3).

The first fixing protrusion 121 is rectangular shaped and has a width seen in the first direction 131 which is smaller than a height seen in the second direction 132. Hence, compared to the two first fixing protrusions 121 shown in Fig. 2, the first fixing protrusion 121 shown in Fig. 3 is a rectangle turned about 90°.

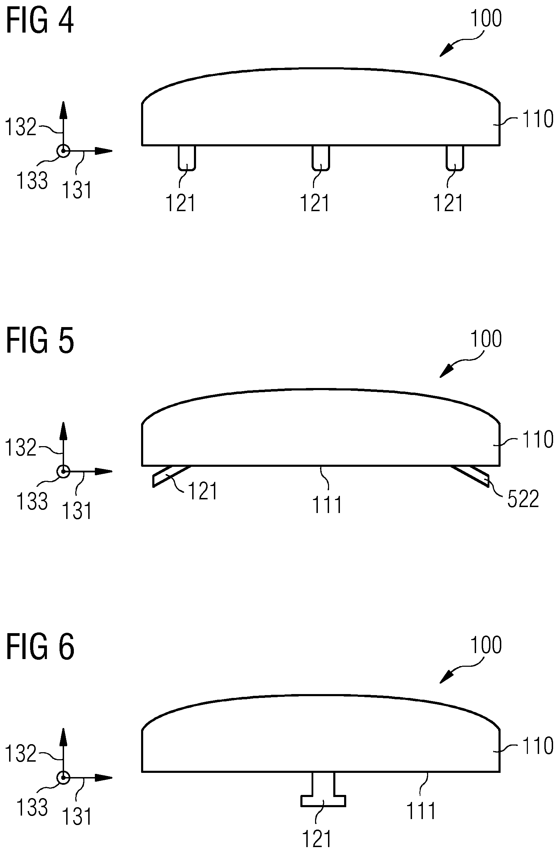

**Fig. 4** shows a cross-sectional view of a permanent magnet 100 comprising three first fixing protrusions 121 according to a general example.

The permanent magnet 100 comprises the base body 110 and three first fixing protrusions 121 which are spaced apart from each other by an even distance in-between the different first fixing protrusions 121. It may be understood that distances between respective adjacent first fixing protrusions may also be uneven (not shown in Fig. 4). The second of the three first fixing protrusions 121 is arranged in the middle of the base body 110 seen in the first direction. The three first fixing protrusions 121 are shaped and formed identical. It may be understood that the second of the three first fixing protrusions 121 may also be arranged at any other circumferential position at the first side 111 and that the three first fixing protrusions 121 may also be shaped and formed different from each other (not shown in Fig. 4).

Each of the three first fixing protrusions 121 is shaped rectangular having a width in the first direction 131 which is smaller than a height in the second direction 132.

**Fig. 5** shows a cross-sectional view of a permanent magnet 100 comprising one first fixing protrusion 121 and one second fixing protrusion 522 according to a general example.

The permanent magnet 100 comprises the base body 110 which is shaped and formed as the base body 110 shown in Fig. 1, the first fixing protrusion 121 and the second fixing protrusion 522.

The first fixing protrusion 121 and the second fixing protrusion 522 are each shaped as a parallelogram in the cross-sectional view. Therefore, the three-dimensional shape of the first fixing protrusion 121 and the second fixing protrusion 522 is a parallelepiped. The extension of the first fixing protrusion 121 and the extension of the second fixing protrusion 522 each have a component in the first direction 131 and a component in the second direction 132. Additionally, the first fixing protrusion 121 and the second fixing protrusion 522 extend pointing away from each other.

**Fig. 6** shows a cross-sectional view of a permanent magnet 100 comprising one first fixing protrusion 121 according to a general example.

The permanent magnet 100 comprises the base body 110 which is formed and shaped identical to the base body 110 shown in Fig. 1, and one first fixing protrusion 121 which is T-shaped and arranged in the middle of the first side 111 seen in the first direction 131, and which extends from the first side 111. It may be understood that the one first fixing protrusion 121 may also be arranged at any other circumferential position at the first side 111 (not shown in Fig. 6).

The T-shaped first fixing protrusion 121 extends in the third direction 133 over the entire depth of the base body 110 seen in the third direction 133.

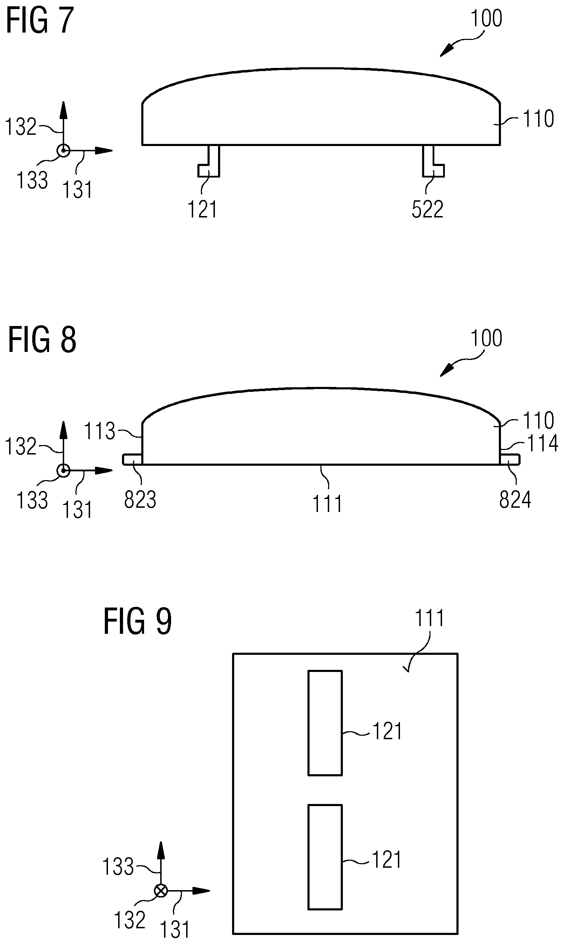

**Fig. 7** shows a cross-sectional view of a permanent magnet 100 comprising one first fixing protrusion 121 and one second fixing protrusion 522 according to an exemplary embodiment.

The first fixing protrusion 121 and the second fixing protrusion 522 are both L-shaped in the cross-sectional view. The first fixing protrusion 121 is distanced from the second fixing protrusion 522. The middle of the distance between the first fixing protrusion 121 and the second fixing protrusion 522 seen in the first direction 131 coincidence with the middle of the base body 110 seen in the first direction 131.

Therefore, each of the first fixing protrusion 121 and the second fixing protrusion 522 is spaced apart from the middle of the base body 110 in the first direction 131.

The longer leg of the L-shaped first fixing protrusion 121 and the second fixing protrusion 522 extends perpendicular to the first side 111 of the base body 110. The respective shorter leg of the first fixing protrusion 121 and the second fixing protrusion 522 extend away from each other and parallel to the first direction 131.

**Fig. 8** shows a cross-sectional view of a permanent magnet 100 comprising one third fixing protrusion 823 and one fourth fixing protrusion 824 according to a general example.

The permanent magnet 100 comprises one third fixing protrusion 823, one fourth fixing protrusion 824, and the base body 110 which is formed and shaped as the base body 110 in Fig. 1. The third fixing protrusion 823 extends perpendicular to the third side 113, and the fourth fixing protrusion 824 extends perpendicular from the fourth side 114. Additionally, the third fixing protrusion 823 and the fourth fixing protrusion 824 are rectangular shaped.

Furthermore, there are no fixing protrusions provided at the first side 111 of the base body 110.

**Fig. 9** shows a side view of a permanent magnet 100 comprising two first fixing protrusions 121 according to a general example. The side view is shown seen in the second direction 132 such that the first side 111 is shown as a plane.

The two first fixing protrusions 121 are distanced relative to each other in the third direction 133. Additionally, the two first fixing protrusions 121 each have a first fixing protrusion depth seen in the third direction 133 which is shorter than a main body depth seen in the third direction 133.

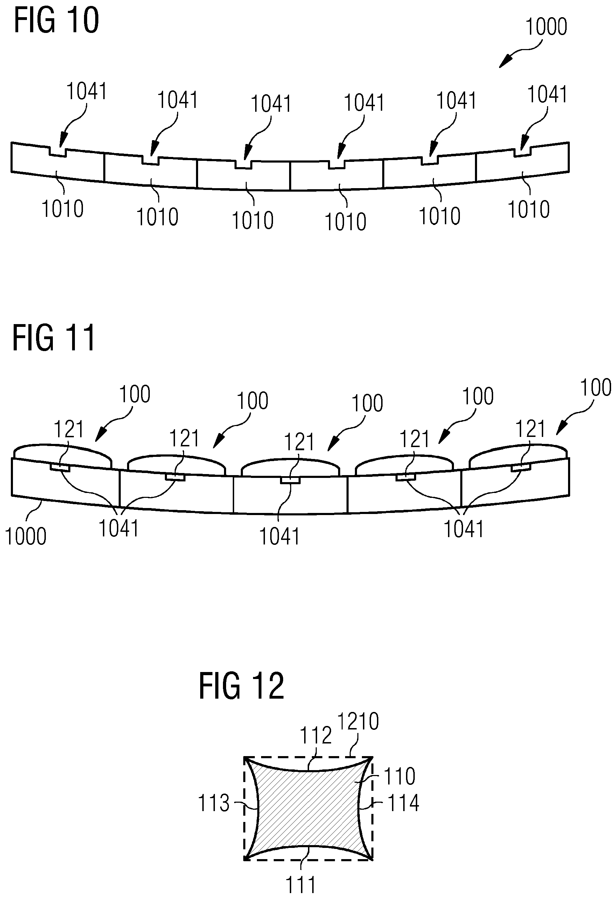

**Fig. 10** shows a sectional view in the axial direction of an outer rotor 1000 before fixing the permanent magnet 100 to the rotor 1000 according to a general example.

The outer rotor 1000 comprises rotor segments 1010 which are arranged on adjacent and in touch to another in a circumferential direction of the rotor 1000.

Each rotor segment 1010 comprises a groove 1041 which is provided on a circumferential inner surface of the outer rotor segments 1010.

**Fig. 11** shows a sectional view in the axial direction of a rotor 1000 after fixing permanent magnets 100 to the rotor 1000 according to a general example.

The rotor 1000 comprises outer rotor segments 1010 each having a groove 1041. One first fixing protrusion 121 is inserted in each of the grooves 1041 such that one permanent magnet 100 is fixed to each rotor segment 1010 by a press fit between the first fixing protrusion 121 and the groove 1041.

**Fig. 12** shows a side view of the base body 110 after forming the base body 110 according to an exemplary embodiment compared to a conventionally formed base body 1210.

In Fig. 12 a conventional base body 1210 is depicted with a dashed line. In comparison, the base body 110 according to an exemplary embodiment is depicted with a continuous line. Particularly, the base body 110 is sintered and then unmachined and ungrinded as well as uncovered, in particular uncoated.

As may be seen from Fig. 12, the geometrical deviation on each of the first side 111, the second side 112, the third side 113 and the fourth side 114 compared to the four sides of the base body 1210 is small. Particularly, the geometric deviation is less than 0.3 mm.

The shrinkage rate could also be taken into account in the mould. Hence, the final magnet will shrink back to the desired size and shape.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Permanent magnet (100) for a permanent magnet machine, comprising
a base body (110), and
at least one first fixing protrusion (121) for fixing the base body (110) to a rotor (1000) of the permanent magnet machine,
wherein the first fixing protrusion (121) extends from a first side (111) of the base body (110), and
wherein the base body (110) and the at least one first fixing protrusion (121) are formed integrally as one-piece,
**characterized in that**
the at least one first protrusion (121) is formed in a cross-sectional view in the form of an L-shape, the longer leg of the L-shaped protrusion (121) extending perpendicular to the first side (111).

2. Permanent magnet (100) according to claim 1, further comprising
at least one second fixing protrusion (522) extending from the first side (111),
wherein the at least one second fixing protrusion (522) is arranged adjacent to the at least one first fixing protrusion (121) .

3. Permanent magnet (100) according to any one of the claims 1 to : 2, wherein the base body (110) further comprises a second side (112) opposite the first side (111),
a third side (113) and a fourth side (114), each interconnecting the first side (111) and the second side (112), and distanced to one another,
wherein the permanent magnet (100) further comprises
at least one third fixing protrusion (823) extending from the third side (113), and/or
at least one fourth fixing protrusion (824) extending from the fourth side (114).

4. Permanent magnet (100) according to any one of the claims 1 to 3, wherein the permanent magnet (100) is uncovered, in particular uncoated.

5. Permanent magnet (100) according to any one of the claims 1 to 4, wherein the permanent magnet (100) is unmachined and/or ungrinded.

6. Permanent magnet machine comprising,
a rotor (1000), and
a permanent magnet (100) according to any one of the claims 1 to 5.

7. Permanent magnet machine according to claim 6, wherein the rotor (1000) comprises at least one groove (1041),
wherein the at least one groove (1041) is formed such that a shape of the at least one groove (1041) corresponds to a shape of the at least one first fixing protrusion (121), and wherein the at least one first fixing protrusion (121) is coupled to the groove (1041).

8. Permanent magnet machine according to claim 6 or 7, wherein the permanent magnet (100) is fixed to the rotor (1000) such that the permanent magnet (100) and the rotor (1000) are unmoveable with respect to each other.

9. Method for manufacturing a permanent magnet (100) for a permanent magnet machine, according to any of the claims 1 to 5, comprising forming a base body (110) having a first side (111), wherein the method further comprises forming at least one first fixing protrusion (121) in a cross-sectional view in the form of an L-shape, the longer leg of the L-shaped protrusion (121) extending perpendicular to the first side (111), wherein the base body (110) and the at least one first fixing protrusion (121) are formed integrally as one-piece.

10. Method according to claim 9, wherein the base body (110) and the at least one first fixing protrusion (121) are formed in one common process step.

11. Method according to claim 9 or 10, wherein the permanent magnet (100) is formed uncovered, in particular uncoated.

12. Method according to one of the claims 9 to 11, wherein the permanent magnet (100) is formed unmachined and/or ungrinded.

13. Method for manufacturing a permanent magnet machine, comprising
providing a permanent magnet (100) for a permanent magnet machine according to any one of the claims 1 to 5,
providing a rotor (1000),
inserting the permanent magnet (100) into the rotor (1000) .

14. Method according to claim 13, further comprising
after inserting the permanent magnet (100) into the rotor (1000), providing an extra layer of coating or spray coating to both, the rotor (1000) and the permanent magnet (100) .

## Patentansprüche

1. Permanentmagnet (100) für eine permanentmagneterregte Maschine, der Folgendes umfasst:
einen Grundkörper (110) und
mindestens einen ersten Befestigungsvorsprung (121) zum Befestigen des Grundkörpers (110) an einem Rotor (1000) der permanentmagneterregten Maschine,
wobei sich der erste Befestigungsvorsprung (121) von einer ersten Seite (111) des Grundkörpers (110) aus erstreckt und wobei der Grundkörper (110) und der mindestens eine erste Befestigungsvorsprung (121) einstückig ausgebildet sind,
**dadurch gekennzeichnet, dass**
der mindestens eine erste Vorsprung (121) in einer Querschnittsansicht in einer L-Form ausgebildet ist, wobei der längere Schenkel des L-förmigen Vorsprungs (121) im rechten Winkel zur ersten Seite (111) verläuft.

2. Permanentmagnet (100) nach Anspruch 1, der ferner Folgendes umfasst:
mindestens einen zweiten Befestigungsvorsprung (522), der sich von der ersten Seite (111) aus erstreckt,
wobei der mindestens eine zweite Befestigungsvorsprung (522) neben dem mindestens einen ersten Befestigungsvorsprung (121) angeordnet ist.

3. Permanentmagnet (100) nach einem der Ansprüche 1 und 2, wobei der Grundkörper (110) ferner Folgendes umfasst:
eine der ersten Seite (111) gegenüberliegende zweite Seite (112),
eine dritte Seite (113) und eine vierte Seite (114), die jeweils die erste Seite (111) und die zweite Seite (112) miteinander verbinden und voneinander beabstandet sind,
wobei der Permanentmagnet (100) ferner Folgendes umfasst:
mindestens einen dritten Befestigungsvorsprung (823), der sich von der dritten Seite (113) aus erstreckt, und/oder
mindestens einen vierten Befestigungsvorsprung (824), der sich von der vierten Seite (114) aus erstreckt.

4. Permanentmagnet (100) nach einem der Ansprüche 1 bis 3,
wobei der Permanentmagnet (100) nicht abgedeckt, insbesondere nicht beschichtet ist.

5. Permanentmagnet (100) nach einem der Ansprüche 1 bis 4,
wobei der Permanentmagnet (100) nicht bearbeitet und/oder nicht geschliffen ist.

6. Permanentmagneterregte Maschine, die Folgendes umfasst:
einen Rotor (1000) und
einen Permanentmagneten (100) nach einem der Ansprüche 1 bis 5.

7. Permanentmagneterregte Maschine nach Anspruch 6,
wobei der Rotor (1000) mindestens eine Nut (1041) umfasst,
wobei die mindestens eine Nut (1041) so ausgebildet ist, dass ihre Form einer Form des mindestens einen ersten Befestigungsvorsprungs (121) entspricht, und
wobei der mindestens eine erste Befestigungsvorsprung (121) mit der Nut (1041) verbunden ist.

8. Permanentmagneterregte Maschine nach Anspruch 6 oder 7,
wobei der Permanentmagnet (100) so an dem Rotor (1000) befestigt ist, dass der Permanentmagnet (100) und der Rotor (1000) in Bezug zueinander nicht beweglich sind.

9. Verfahren zum Herstellen eines Permanentmagneten (100) für eine permanentmagneterregte Maschine nach einem der Ansprüche 1 bis 5, das Folgendes umfasst:
Bilden eines Grundkörpers (110) mit einer ersten Seite (111),
wobei das Verfahren ferner Folgendes umfasst:
Bilden mindestens eines ersten Befestigungsvorsprungs (121) in einer Querschnittsansicht in einer L-Form, wobei der längere Schenkel des L-förmigen Vorsprungs (121) im rechten Winkel zur ersten Seite (111) verläuft,
wobei der Grundkörper (110) und der mindestens eine erste Befestigungsvorsprung (121) einstückig ausgebildet sind.

10. Verfahren nach Anspruch 9,
wobei der Grundkörper (110) und der mindestens eine erste Befestigungsvorsprung (121) in einem gemeinsamen Prozessschritt ausgebildet werden.

11. Verfahren nach Anspruch 9 oder 10,
wobei der Permanentmagnet (100) nicht abgedeckt, insbesondere nicht beschichtet ausgebildet wird.

12. Verfahren nach einem der Ansprüche 9 bis 11,
wobei der Permanentmagnet (100) nicht bearbeitet und/oder nicht geschliffen ausgebildet wird.

13. Verfahren zum Herstellen einer permanentmagneterregten Maschine, das Folgendes umfasst:
Bereitstellen eines Permanentmagneten (100) für eine permanentmagneterregte Maschine nach einem der Ansprüche 1 bis 5,
Bereitstellen eines Rotors (1000),
Einführen des Permanentmagneten (100) in den Rotor (1000).

14. Verfahren nach Anspruch 13, das ferner Folgendes umfasst:
nach dem Einführen des Permanentmagneten (100) in den Rotor (1000) Bereitstellen einer zusätzlichen Schicht einer Beschichtung oder Spritzbeschichtung für den Rotor (1000) sowie den Permanentmagneten (100).

## Revendications

1. Aimant permanent (100) pour une machine à aimant permanent, comprenant
un corps de base (110), et
au moins une première saillie de fixation (121) pour fixer le corps de base (110) à un rotor (1000) de la machine à aimant permanent,
dans lequel la première saillie de fixation (121) s'étend depuis un premier côté (111) du corps de base (110), et
dans lequel le corps de base (110) et l'au moins une première saillie de fixation (121) sont formés d'un seul tenant en une seule pièce,
**caractérisé en ce que**
l'au moins une première saillie (121) est formée dans une vue en coupe transversale en forme de L, la patte la plus longue de la saillie en forme de L (121) s'étendant perpendiculairement au premier côté (111).

2. Aimant permanent (100) selon la revendication 1, comprenant en outre
au moins une deuxième saillie de fixation (522) s'étendant depuis le premier côté (111),
dans lequel l'au moins une deuxième saillie de fixation (522) est agencée de manière adjacente à l'au moins une première saillie de fixation (121).

3. Aimant permanent (100) selon l'une quelconque des revendications 1 à 2, dans lequel le corps de base (110) comprend en outre
un deuxième côté (112) opposé au premier côté (111),
un troisième côté (113) et un quatrième côté (114), chacun interconnectant le premier côté (111) et le deuxième côté (112), et éloignés l'un de l'autre,
dans lequel l'aimant permanent (100) comprend en outre
au moins une troisième saillie de fixation (823) s'étendant depuis le troisième côté (113), et/ou
au moins une quatrième saillie de fixation (824) s'étendant depuis le quatrième côté (114).

4. Aimant permanent (100) selon l'une quelconque des revendications 1 à 3, dans lequel l'aimant permanent (100) est découvert, en particulier non revêtu.

5. Aimant permanent (100) selon l'une quelconque des revendications 1 à 4, dans lequel l'aimant permanent (100) est non usiné et/ou non meulé.

6. Machine à aimant permanent comprenant,
un rotor (1000), et
un aimant permanent (100) selon l'une quelconque des revendications 1 à 5.

7. Machine à aimant permanent selon la revendication 6,
dans laquelle le rotor (1000) comprend au moins une rainure (1041),
dans laquelle l'au moins une rainure (1041) est formée de sorte qu'une forme de l'au moins une rainure (1041) corresponde à une forme de l'au moins une première saillie de fixation (121), et
dans laquelle l'au moins une première saillie de fixation (121) est couplée à la rainure (1041).

8. Machine à aimant permanent selon la revendication 6 ou 7, dans laquelle l'aimant permanent (100) est fixé au rotor (1000) de sorte que l'aimant permanent (100) et le rotor (1000) ne soient pas mobiles l'un par rapport à l'autre.

9. Procédé de fabrication d'un aimant permanent (100) pour une machine à aimant permanent, selon l'une des revendications 1 à 5, comprenant
la formation d'un corps de base (110) ayant un premier côté (111),
dans lequel le procédé comprend en outre
la formation d'au moins une première saillie de fixation (121) dans une vue en coupe transversale en forme de L, la patte la plus longue de la saillie en forme de L (121) s'étendant perpendiculairement au premier côté (111),
dans lequel le corps de base (110) et l'au moins une première saillie de fixation (121) sont formés d'un seul tenant en une seule pièce.

10. Procédé selon la revendication 9, dans lequel le corps de base (110) et l'au moins une première saillie de fixation (121) sont formés dans une étape de traitement commune.

11. Procédé selon la revendication 9 ou 10, dans lequel l'aimant permanent (100) est formé en étant découvert, en particulier non revêtu.

12. Procédé selon l'une des revendications 9 à 11, dans lequel l'aimant permanent (100) est formé en étant non usiné et/ou non meulé.

13. Procédé de fabrication d'une machine à aimant permanent, comprenant
la fourniture d'un aimant permanent (100) pour une machine à aimant permanent selon l'une quelconque des revendications 1 à 5,
la fourniture d'un rotor (1000),
l'insertion de l'aimant permanent (100) dans le rotor (1000) .

14. Procédé selon la revendication 13, comprenant en outre
après l'insertion de l'aimant permanent (100) dans le rotor (1000), la fourniture d'une couche supplémentaire de revêtement ou de revêtement par pulvérisation à la fois au rotor (1000) et à l'aimant permanent (100).
